# EUROPEAN PATENT SPECIFICATION

(11) **EP 2 084 416 B1**
(45) Date of publication and mention of the grant of the patent: **28.04.2010**
(21) Application number: 07824379.7
(22) Date of filing: 30.10.2007
(51) Int. Cl.: F16C 32/06, F16C 35/10

(54) **AEROSTATIC BEARING SPINDLES**
SPINDELN MIT AEROSTATISCHEM LAGER
BROCHES À PALIERS AÉROSTATIQUES

(30) Priority: 31.10.2006 GB 0621699
(43) Date of publication of application: 05.08.2009
(73) Proprietor: GSI Group Limited, Swift Valley Rugby Warwickshire CV21 1QN (GB)
(72) Inventor: POWELL, Robin, John, william, Dorset BH12 3BQ (GB); STRATTON, John, David, Hampshire SO40 7BS (GB); LOCK, Steven, R., Hampshire SO16 8DD (GB); GERRARD, Christopher, Paul, Dorset BH23 7JS (GB)
(74) Representative: Faulkner, Thomas John
(86) International application number: PCT/GB2007/004135
(87) International publication number: WO 2008/053196

(56) References cited:
- FR-A- 1 009 069
- FR-A- 1 418 180
- GB-A- 724 603
- US-A- 3 134 336

## Description

This invention relates to aerostatic bearing spindles and bearings for such spindles.

Such aerostatic bearing spindles are typically used in machining applications such as high speed drilling, for example the drilling of printed circuit boards. Such drilling machines may run at rotational speeds of say, in the range of 50,000 to 300,000 rpm. In printed circuit board drilling, in particular, there is a desire to have spindles that can operate over a wide range of rotational speeds so as to be useful with a wide range of tool diameters. (Generally speaking, the smaller the tool diameter, the faster that tool must be rotated to achieve a sufficient cutting speed to provide satisfactory drilling).

One of the most significant design parameters in the design of high speed aerostatic spindles is the prediction of synchronous resonance frequencies of the shaft assembly generated in the journal air film. There are two fundamental frequencies of concern which are usually referred to as the cylindrical and conical whirl frequencies - which describe the motion of the shaft within the bearing system. By careful design and accurate balancing it is quite possible for the shaft to run through and considerably beyond these resonant frequencies, but due to the reduced air film damping at these high speeds, the shaft can exhibit a considerable radial orbit in the region of the resonant frequencies. Ideally a spindle is designed so that these two frequencies coincide, minimising the frequency range over which the orbit is large, but this still leaves a problem, particularly where a spindle is to operate over a large range of speeds.

It is also true that to accommodate the forces involved in machining, the largest spindle shaft diameter that can be operated at the highest desired speed is usually selected.

Unfortunately this increases the problem of shaft centrifugal growth at high speed and therefore increases the problem of maintaining adequate clearance between the shaft and the radial air bearing at maximum speed. This generally leads to there being a larger than required clearance at lower speeds. This is turn can have an adverse effect on bearing performance, particularly stiffness and damping, which can serve to add to the dynamic problems at the resonant frequencies mentioned above.

Prior art technique can be seen in document US-A-3134336. It is an object of the present invention to provide aerostatic bearing spindles and bearings which aim to alleviate at least some of the problems encountered with existing spindles.

According to one aspect of the present invention there is provided an aerostatic bearing spindle as claimed in claim 1.

Such an arrangement can give rise to a damping effect which helps limit orbiting of the shaft within the bearing as one or more resonant frequency is reached. The damping effect may be characterised as what can be described as a squeeze film damping effect. The additional damping of the orbit may arise from an enhancement of the squeeze film damping coefficient within the bearing.

The expression plain jet is used in contradistinction to pocketed jet, of the type that are traditionally used in aerostatic bearings. In a pocketed jet the outlet of the jet is disposed in a pocket or recess in the bearing surface. In a plain jet the outlet of the jet is at the bearing surface. The use of plain jets can also aid damping.

The jets in the series of jets may be arranged as an incomplete ring around the bearing surface.

The jets may be unequally distributed around the circumference of the bearing.

The jets may be arranged around the circumference of the bearing such that there is a jetted region and a non jetted region, where the non jetted region occupies a portion of the circumference that is greater than the average circumferential spacing between adjacent jets in the jetted region. Preferably the jets within the jetted region are equispaced. The jets may be arranged so that the circumferential spacing between the jets bordering each end of the non jetted region is an integral multiple of the circumferential spacing between the jets in the jetted region.

The jets may be asymmetrically distributed around the circumference of the bearing such that if the circumference is considered as divided into two and only two zones, each comprising at least two jets, the average spacing of adjacent jets in one of the zones is a greater than in the other of the zones.

In some embodiments, outlets of the jets within one series may be arranged on a circumferential line around the bearing surface. In other embodiments, outlets of the jets within one series may be axially spaced from one another. The outlets may, for example, be provided in a staggered arrangement.

Preferably each series of jets comprises at least six jets, more preferably each series of jets comprises eight, nine or ten jets. Each bearing portion may have a respective single series of jets.

In the present bearing spindles it is preferable to increase the number of jets in each series and correspondingly reduce the number of series of jets compared with what would be chosen in a conventional aerostatic bearing spindle. This is because to give better tolerance to dispersion - pressure drops between jets - more jets are better, but an overall increase in the number of jets increases air consumption and running costs. Dispersion can be a significant issue in spindles of the current type because large static clearance may be used to allow high running speeds and because of the arrangement, typically "omission", of jets to improve damping.

The aerostatic bearing spindle may comprise at least one exhaust for gas from the gas film to leave the bearing, wherein the exit of gas from the gas film is controlled to create back pressure to provide damping in the bearing. The exhaust may comprise a constriction.

The bearing may comprise a plurality of holes each of which is capable of acting as a supply port when unobstructed. At least one of said plurality of holes may be obstructed to prevent it acting as a supply port whilst the other holes in said plurality of holes are unobstructed and act as supply ports in use.

According to another aspect of the invention there is provided an aerostatic bearing spindle arrangement as claimed in claim 12.

According to a further aspect of the invention there is provided a method of operating an aerostatic bearing spindle arrangement as claimed in claim 14.

According to yet a further aspect of the present invention there is provided a method of control orbiting of a shaft within a bearing of an aerostatic bearing spindle as claimed in claim 15.

The aerostatic bearing spindle will typically be a high speed spindle. The spindle may be arranged to allow rotation of the shaft relative to the bearing at in excess of 50,000 RPM. In some cases the spindle may be arranged to allow rotation of the shaft relative to the bearing at in the order of 300,000 RPM.

The spindle may comprise a plurality of aerostatic bearings. Each of the bearings may have some or all of the features defined above.

Embodiments of the present invention will now be described, by way of example only, with reference to the accompanying drawings in which:
Figure 1 schematically shows an aerostatic bearing spindle;
Figure 2A shows a sectional view of a conventional bearing which might be used in a spindle of the type shown in Figure 1;
Figure 2B is a section on line IIB - IIB of the bearing shown in Figure 2A;
Figure 3A shows a sectional view of a bearing which embodies the present invention and which may be used in a spindle embodying the present invention of the type shown in Figure 1;
Figure 3B is a section on line IIIB - IIIB of the bearing shown in Figure 3A;
Figure 4 shows an example of a plain jet and a pocketed jet each being of a type which may be used in the bearing of Figures 3A and 3B;
Figure 5 is a plot showing the radial orbit of a shaft at different rotation rates, within a spindle of the type shown in Figure 1, where bearings of the type shown in Figures 2A and 2B, and of the type shown in Figures 3A and 3B, are used; and
Figure 6 schematically shows an aerostatic air bearing spindle arrangement comprising an air bearing spindle of the type shown in Figure 1 and an active control system for using in controlling operation of the spindle.

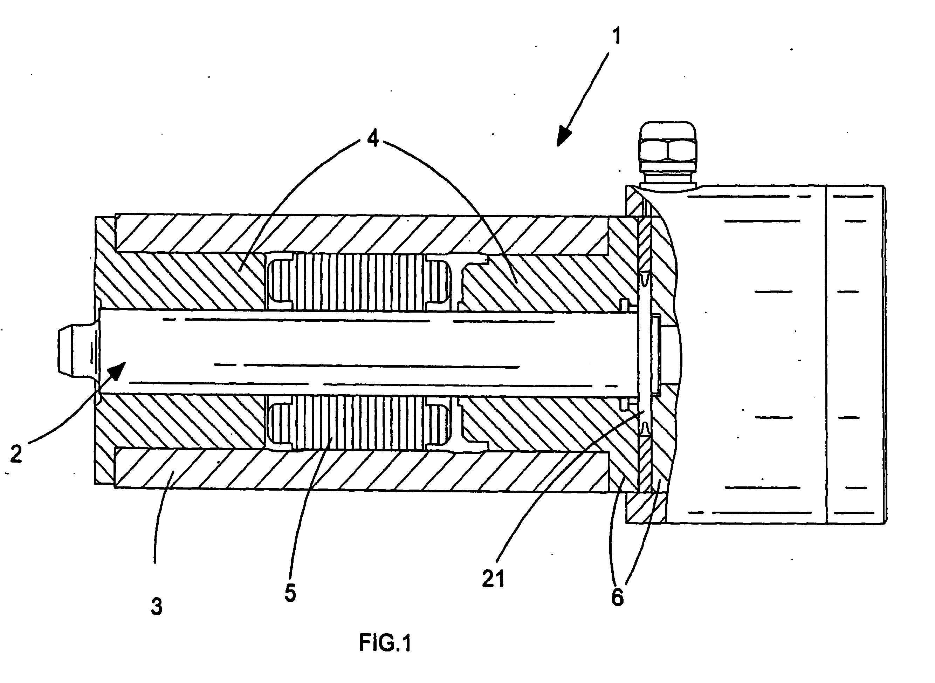

Figure 1 shows a high speed pressurised aerostatic bearing spindle 1 which is arranged to be used in a drilling machine and to run at speeds in excess of 50,000 rpm and up to speeds in the region of 300,000 rpm. The spindle comprises a shaft assembly 2 which is supported for rotation within a main body 3 by virtue of a pair of air bearings 4. Between the pair of air bearings 4 there is disposed an integral rotary electric motor 5 which is used for rotatingly driving the shaft assembly 2 relative to the remainder of the spindle. The structure and operation of the motor 5 is conventional in the field of aerostatic bearing drilling spindles and therefore it will not be described in greater detail. An opposed pair of axial bearings 6 are provided at one end of the spindle sandwiching a shaft runner 21 and providing axial location. A tool holder (not shown) is provided at the other end of the shaft assembly 2 for holding a tool, which in this embodiment would be a drilling tool.

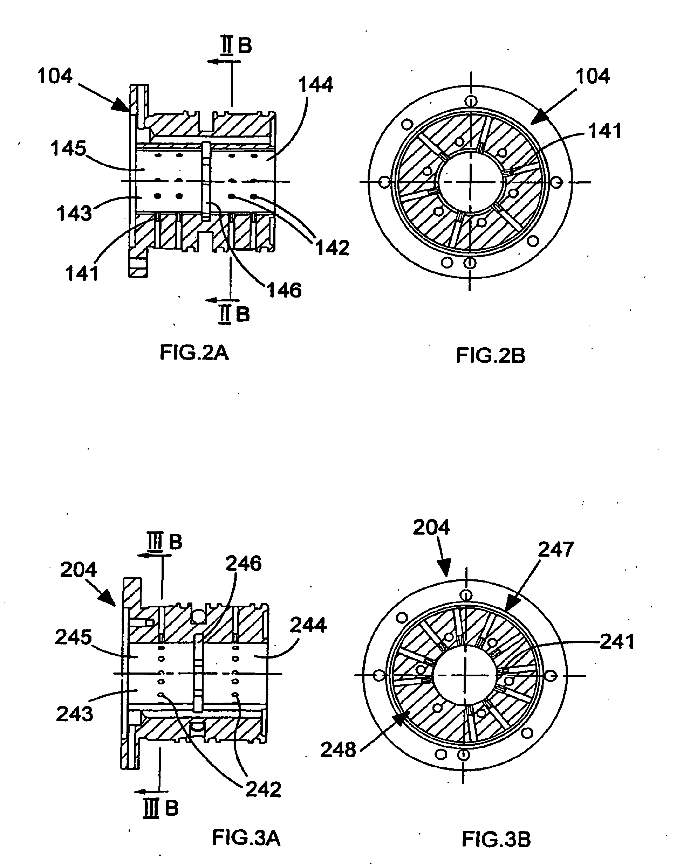

Figures 2A and 2B show a conventional bearing 104. To provide a conventional spindle, two such conventional bearings 104 may be used as the air bearings 4 shown in the spindle of Figure 1. The air bearing 104 is generally cylindrical and is provided with a plurality of jets 141 which in this bearing are arranged in four series 142 which are axially spaced from one another. The jets 141 in each series are provided around the circumference of the bearing surface 143 of the bearing 104. Furthermore, the jets 141 and their respective outlets are equally spaced around the circumference of the bearing surface 143. In this bearing 104 there are six jets in each row. In this case, for maximum static stiffness and optimum high speed dynamic stability in a conventional spindle, there are four rows of jets in a twin journal bearing design. Thus, there is a first bearing portion 144 which comprises a pair of series 142 of jets 141 and a second bearing portion 145 comprising a second respective pair of series 142 of jets 141. The bearing portions 144, 145 are separated by an exhaust groove 146 which is vented to atmosphere. The series of jets 142 in each bearing portion 144, 145 are spaced from one another by one third of the length of the respective bearing portion 144, 145.

Whilst using such conventional bearings 104 in the spindle shown in Figure 1, can give rise to satisfactory results in some circumstances, there can be significant orbiting of the shaft assembly 2 within the bearings 4 at the synchronous resonant frequencies as mentioned in the introduction. This can give rise to positional machining errors and small diameter tool breakages.

Figures 3A and 3B show a different form of bearing 204 which embodies the present invention either on its own or when used in a spindle of the type shown in Figure 1. Again a bearing 204 of the type shown in Figures 3A and 3B may be used for both of the bearings 4 shown in Figure 1. Here again the bearing 204 is generally cylindrical and has a generally cylindrical bearing surface 243. Again there are two bearing portions 244, 245 separated by an exhaust groove 246. Again a plurality of jets 241 are provided in the bearing 204 for supplying gas, typically air, to the bearing surface 243 to form a journal air film between the bearing surface 243 and the shaft 2 when the bearing 204 is assembled into a spindle 1 of the type shown in Figure 1 and is in operation.

However, in this case there are two, and only two, series 242 of jets 241; one in each of the bearing portions 244, 245. Each series 242 is provided centrally within the axial extent of the respective bearing portion 244,245. There are ten jets 241 in each series 242 rather than the six in the bearing shown in Figures 2A and 2B.

As best seen in Figure 3B, the jets 241 are asymmetrically arranged around the circumference of the bearing 204. In particular, the outlets of the jets 241 are asymmetrically arranged around the bearing surface 243. The bearing 204 can be considered to have a jetted region 247 and an unjetted region 248. The jets 241 in the jetted region 247 are angularly equispaced (in this embodiment spaced by 30°) from one another so that the outlets of the jets are circumferentially equispaced around the bearing surface 243. Moreover, the arrangement of the jets 241 is such that it is as if two jets have been omitted from a series of 12 jets in the unjetted region 248. Thus, the angular separation between the jets 241 at the respective ends of the jetted region 247 is equal to three times the angular separation between the adjacent jets in the jetted region 247, i.e. they are separated by 90°. If one jet 241 was omitted from each series the damping effect would be considerably less. If more than two jets were omitted, the damping effect would be greater, but the reduction in load capacity would become more problematic.

The single central row of jets 242 in each bearing portion 244, 245 used in the bearing 204 shown in Figures 3A and 3B is more tolerant to changes in bearing clearance across the speed range in which the spindle is to be operated. This is due to there being less dispersion between jets 241, that is to say less of a change in pressure of the journal film between the jets 241 which of course occurs because there is a smaller circumferential distance between the adjacent jets 241.

The provision of an asymmetric jet arrangement, for example by the effective omission of jets, gives rise to an unequal pressure profile around the inner diameter, i.e. around the bearing surface 243, of the bearing 204.

The effect of having the jets 241 asymmetrically arranged around the bearing 204 and leaving an unjetted region 248 is that, in operation, the shaft 2 will adopt a slightly off axis position relative to the geometrically central axis of the bearing 204 as an equilibrium position. It has been found that this gives rise to damping effects which are sufficient to significantly reduce the magnitude of radial orbiting which a shaft will exhibit during operation at speeds in the region of one or other or both of the synchronous resonant frequencies of the shaft assembly.
The jetted regions 247 and unjetted regions 248 are arranged to be in register with one another in the two series 242 of jets 241. That is to say the unjetted regions 248 are located at substantially the same circumferential region in both series of jets 242 i.e. in both bearing portions 244, 245. It will be seen that this helps give rise to the slightly off axis equilibrium position for the shaft during operation and helps give rise to an increase in squeeze film damping component.

It is believed that the slightly off axis position of the shaft 2 which occurs when using a bearing of the type shown in Figures 3A and 3B, gives rise to what can be characterised as a squeeze film damping effect.

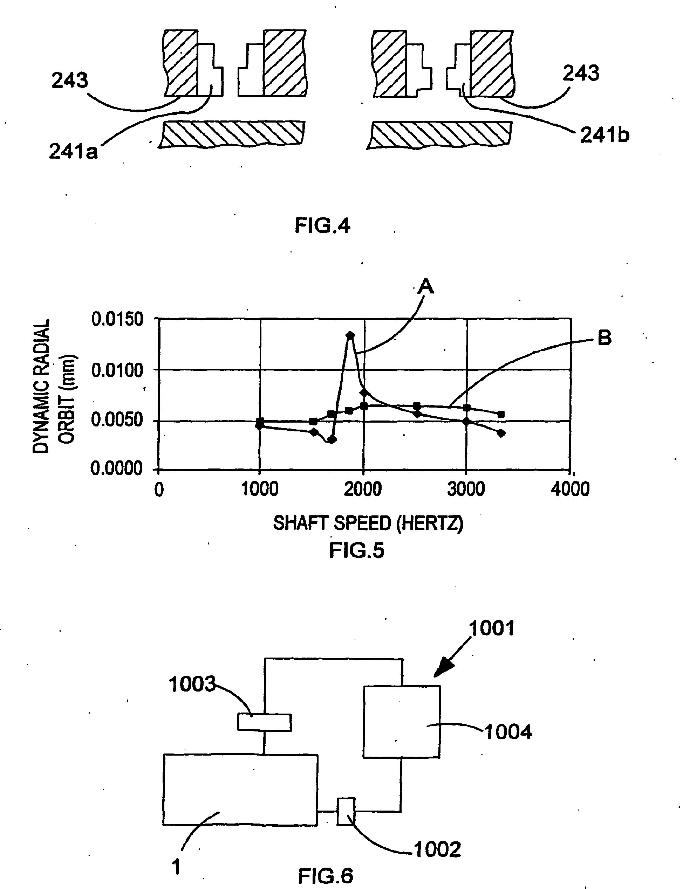

This damping effect has been found to be further enhanced where each of the jets 241 is a plain jet rather than a pocketed jet. Figure 4 shows an example of a plain jet 241a and a pocketed jet 241b when adjacent to the curved surface of a shaft 2. It will be seen that in the plain jet 241 a the outlet of the jet is flush with the bearing surface 243 whereas in a pocketed jet 241b the outlet of the jet is in a recess (or a pocket) which is recessed away from the bearing surface 243. Whilst the damping qualities can be improved by the use of plain jets 241a in the place of pocketed jets 241b, this can lead to some reduction in radial load capacity and stiffness which might impact on the maximum operating speed of the spindle.

Whilst the bearing shown in Figures 3A and 3B has a single row of jets 241 in each bearing portion 244, 245, this is not essential. The particular bearing schematically shown in Figures 3A and 3B was designed to replace that shown in Figures 2A and 2B to give enhanced resonant frequency orbit suppression combined with equal static performance characteristics along with a reduction in air consumption and running costs. In order to define the asymmetry more precisely the jet omissions were configured within one row of 12 jets rather than two rows of six wherein each jet omitted would represent a very coarse change.

Figure 5 shows a plot of dynamic radial orbit of a shaft 2 being rotated in a spindle 1 of the type shown in Figure 1 at different rates of shaft rotation. A first line A, shows the behaviour exhibited by a spindle incorporating two bearings of the type shown in Figures 2A and 2B and a second line B shows the behaviour exhibited by a spindle of the type shown in Figure 1 incorporating two bearings of the type shown in Figures 3A and 3B. This plot graphically shows the reduction in orbiting that was achieved in this example.

It will be appreciated that in other embodiments differing numbers of jets may be used and unjetted regions of differing angular sizes may be used. The unjetted region preferably occupies an angle of between 45° and 120°, more preferably between 60° and 90° or between 60° and 80°. Preferably there are at least 6 jets. In other examples, a desired offset of the shaft may be achieved by changing the size of some of the jets, changing the spacing of the jets in some regions of the bearing compared with others, introducing additional jets, or so on.

In the above bearing 204, the asymmetric jet pattern is achieved by omitted jets when the bearing is manufactured - ie by not drilling the holes for the jets which are not required. In an alternative, when the bearing is manufactured all of the jets may be originally produced by drilling and/or other appropriate machining but then one or more of the jets may be obstructed to give the desired jet pattern for a particular application. The chosen holes may be obstructed by for example, the insertion of the requisite number of plugs or by using tape. This can provide a more convenient way to provide a number of different damping effects for different applications/situations than making a number of different bearing sleeves with different specific pre-drilled jet patterns.

In a further alternative the flow of gas in the exhaust groove 246 may be modified with a view to creating a damping effect. The exhaust groove 246 may be vented to atmosphere by one or a plurality of exhaust outlets (not shown). To aid in creating a damping effect only a single outlet may be provided. Further at least one outlet may be throttled, by the provision of a restriction. This can create a back pressure which has a localised effect and can aid in providing a damping effect on orbiting of the shaft.

As described above, in the bearing 204 shown in Figures 3A and 3B there are two series of jets 242 with both series providing a jetted 247 and an unjetted region 248. In that bearing 204 the unjetted region 248 in one series is in register with the unjetted region 248 in the other series. In an alternative there can similarly be two series of jets each providing a jetted and an unjetted region but with the unjetted region of one series not being in register with that of the other. The unjetted regions might be diametrically opposed to one another.

In the above description mention is made causing the shaft to adopt an off-centre position to enhance a damping effect against orbiting of the shaft. In some alternatives a similar damping may be achieved without the shaft necessarily adopting an off-axis position. Here the effect will not be squeeze film damping as described above, but providing there is damping of the tendency for the shaft to orbit there can still be a useful effect. Damping without an off-axis position of the shaft may occur for example where localised back pressure effects are generated by controlling the exit of exhaust gas as described above. Similarly, for example, this might occur where unequal pressure profiles are obtained by controlling supply of gas to the gas film. One possible arrangement is where there are two series of jets, each with unjetted regions and these are diametrically opposite one another as described above. In such a case any offsetting effects might balance one another out, whilst there is still a damping effect.

Whilst above in the bearing of Figures 3A and 3B a single rows of jets 242 is provided on each side of the exhaust groove 246, or to put this another way in each half bearing, in alternatives there might be two or more rows of jets 242 on each side of the exhaust groove 246. Each row or selected ones of the rows may have unjetted regions.

In other alternatives rather than jetted bearings, the spindle may comprise slot fed bearings, again arranged to give a damping effect against orbiting of the shaft in similar ways to those described above.

Figure 6 schematically shows an aerostatic air bearing spindle arrangement comprising an air bearing spindle 1 of the type shown in Figure 1 with bearings of the type shown in Figures 2A and 2B and an active control system 1001 for use in controlling operation of the spindle. The control system 1001 comprises a sensor 1002 for sensing the behaviour of the shaft 2 of the spindle, a plurality of valves 1003 for controlling the supply of gas to the jets 141 in the bearing 104 of the spindle 1 and a control module 1004 for controlling the valves 1003 in response to signals from the sensor 1002. The sensor 1002 can for example comprise a vibration sensor for sensing undesirable vibration of the shaft 2 as may occur in a resonance condition.

The valves 1003 are arranged to independently control the supply of gas to the gas film via respective sets of the jets 141. In the present example there are two valve 1003, a first of which controls supply of gas to one row (in the axial direction) of jets through the bearing 104 and the second of which controls supply of gas to the remaining 5 rows of jets 141. With such a control system 1001 damping can be selectively applied to the bearing 104, in dependence on the output of the sensor 1002. In particular, at chosen times the supply of gas to the single row of jets supplied by the first valve can be reduced to provide a variation in the pressure distribution in the gas film around the bearing 104 and hence encourage damping. Such a step can be taken as a resonance is approached, the approach of resonance being indicated by the output of the sensor 1002. The supply of gas can be maintained at a reduced level whilst the output of the sensor exceeds a predetermined threshold.

In an alternative such a step of increasing damping might be taken at a predetermined (range of) shaft speed(s).

At least some of these alternative techniques may aid in increasing the stiffness of the bearing, at least at some operational speeds. For example, more stiffness may be provided at lower speeds - corresponding to the use of larger drills in a drilling machine using such a spindle and arranged to use different size drilling tools.

It will be appreciated that as the present bearings spindles are aerostatic bearing spindles, they are supplied with pressurised gas (typically air) from an external source to operate. That is air from, for example, a compressor is fed into the bearing to create the journal gas film. Thus, of course the pressure supplied to the bearing can be controlled completely independently of the running speed of the shaft. To help in high speed operation, the present spindles are arranged to operate at high pressure - at 5 bar or above - typically in the range of 5 to 7 bar - that is to say the gas (usually air) is feed into the bearing at this pressure.

The provision of plain jets can be particularly advantageous at high pressures. This is because at such pressures, the bearings can become particular susceptible to a self-induced air film excitation or resonance (commonly called 'moan' or 'air hammer') - a problem which is much less likely at say 2 bar. It has been found that minimising or removing the "pocket volume" around each jet by the use of plain jets can help prevent this undesirable instability occurring.

## Claims

1. An aerostatic bearing spindle comprising a shaft journalled within an aerostatic bearing, the bearing comprising at least two series of plain jets for supplying gas to generate a journal gas film between the shaft and the bearing, wherein the jets are arranged around a circumference of the bearing in such a way as to cause, in use, an unequal pressure profile around the bearing, wherein the bearing is twin bearing with a common exhaust between two axially spaced bearing portions, each bearing portion comprising a respective one of the at least two series of jets.

2. An aerostatic bearing spindle according to claim 1 in which the unequal pressure profile causes the shaft to adopt an off-axis position within the bearing in use.

3. An aerostatic bearing spindle according to claim 1 or claim 2, in which the jets in each series of jets are arranged as an incomplete ring around the bearing surface.

4. An aerostatic bearing spindle according to any preceding claim in which the jets are unequally distributed around the circumference of the bearing.

5. An aerostatic bearing spindle according to any preceding claim in which the jets are arranged around the circumference of the bearing such that there is a jetted region and a non jetted region, where the non jetted region occupies a portion of the circumference that is greater than the average circumferential spacing between adjacent jets in the jetting region.

6. An aerostatic bearing spindle according to claim 5 in which the jets within the jetted region are equispaced.

7. An aerostatic bearing spindle according to any preceding claim in which the outlets of the jets within one series are arranged on a circumferential line around the bearing surface.

8. An aerostatic bearing spindle according to any one of claims 1 to 6 in which outlets of the jets within one series are axially spaced from one another.

9. An aerostatic bearing spindle according to any preceding claim which comprises at least one exhaust for gas from the gas film to leave the bearing, wherein the exit of gas from the gas film is controlled to create back pressure to provide damping in the bearing.

10. An aerostatic bearing spindle according to claim 9 in which the exhaust comprises a constriction.

11. An aerostatic bearing spindle according to any preceding claim in which the bearing comprises a plurality of holes each of which is capable of acting as a jet when unobstructed, wherein at least one of said plurality of holes is obstructed to prevent it acting as a jet whilst the other holes in said plurality of holes are unobstructed and act as jets in use.

12. An aerostatic bearing spindle arrangement comprising an aerostatic bearing spindle according to any preceding claim and an active control system for controlling at least one of the supply of gas to the gas film and exit of gas from the gas film to controllably alter the pressure profile around the bearing in use.

13. An aerostatic bearing spindle arrangement according to claim 12 in which the active control system comprises at least one sensor for sensing the behaviour of the shaft, at least one valve for controlling at least one of the supply of gas to the gas film and exit of gas from the gas film and a control module for controlling operation of the valve in response to the output of the sensor.

14. A method of operating an aerostatic bearing spindle arrangement according to claim 12 or claim 13 comprising the step of using the active control system to provide a higher level of damping in the bearing when the shaft is rotating at a rate within a predetermined range around a resonant frequency of the system than when the shaft is rotating at a rate outside the predetermined range.

15. A method of control orbiting of a shaft within a bearing of an aerostatic bearing spindle, the spindle comprising a shaft journalled within an aerostatic bearing and the bearing comprising at least two series of plain jets for supplying gas to generate a journal gas film between the shaft and the bearing, wherein the bearing is twin bearing with a common exhaust between two axially spaced bearing portions, each bearing portion comprising a respective one of the at least two series of jets and the method comprising the step of causing an unequal pressure profile around the bearing to cause a damping effect on the orbiting of the shaft within the bearing.

## Patentansprüche

1. Eine Spindel mit aerostatischem Lager, umfassend eine Welle, die innerhalb eines aerostatischen Lagers gedreht wird, während das Lager umfasst: mindestens zwei Reihen ebener Düsen zum Versorgen mit Gas, um eine Drehgasschicht zwischen der Welle und dem Lager zu erzeugen, wobei die Düsen um einen Umfang des Lagers derart angeordnet sind, um in Verwendung ein ungleichmäßiges Druckprofil um das Lager zu bewirken, während das Lager ein Zwillingslager mit einem gemeinsamen Auslass zwischen zwei axial beabstandeten Lagerabschnitten ist, wobei jeder Lagerabschnitt eine entsprechende der mindestens zwei Düsenreihen umfasst.

2. Eine Spindel mit aerostatischem Lager gemäß Anspruch 1, in der das ungleichmäßige Druckprofil die Welle dazu veranlasst, eine außermittige bzw. Position außerhalb der Achse innerhalb des in Verwendung befindlichen Lagers anzunehmen.

3. Eine Spindel mit aerostatischem Lager gemäß Anspruch 1 oder Anspruch 2, in der die Düsen in jeder Düsenreihe als unvollständiger Ring um die Lageroberfläche angeordnet sind.

4. Eine Spindel mit aerostatischem Lager gemäß einem der vorhergehenden Ansprüche, in der die Düsen ungleichmäßig über den Umfang des Lagers verteilt sind.

5. Eine Spindel mit aerostatischem Lager gemäß einem der vorhergehenden Ansprüche, in der die Düsen über den Umfang des Lagers derart angeordnet sind, dass eine bedüste Region und eine nicht bedüste Region vorhanden ist, wobei die nicht bedüste Region einen Abschnitt des Umfangs einnimmt, der größer ist als der durchschnittliche umfängliche Abstand zwischen benachbarten Düsen in der bedüsten Region.

6. Eine Spindel mit aerostatischem Lager gemäß Anspruch 5, in der die Düsen innerhalb der bedüsten Region gleichmäßig beabstandet sind.

7. Eine Spindel mit aerostatischem Lager gemäß einem der vorhergehenden Ansprüche, in der die Auslässe der Düsen innerhalb einer Reihe auf einer umfänglichen Linie um die Lageroberfläche angeordnet sind.

8. Eine Spindel mit aerostatischem Lager gemäß einem der Ansprüche 1 bis 6, in der die Auslässe der Düsen innerhalb einer Reihe axial voneinander beabstandet sind.

9. Eine Spindel mit aerostatischem Lager gemäß einem der vorhergehenden Ansprüche, die umfasst: mindestens einen Auslass für Gas von der Gasschicht, um das Lager zu verlassen, während der Austritt von Gas aus der Gasschicht gesteuert wird, um einen Gegendruck zu erzeugen, um ein Dämpfen in dem Lager bereitzustellen.

10. Eine Spindel mit aerostatischem Lager gemäß Anspruch 9, in der der Auslass eine Verengung aufweist.

11. Eine Spindel mit aerostatischem Lager gemäß einem der vorhergehenden Ansprüche, in der das Lager aufweist: eine Mehrzahl an Löchern, von denen jedes dazu geeignet ist, als eine Düse zu agieren, wenn es unversperrt ist, während mindestens eins aus der Mehrzahl der Löcher versperrt ist, um zu verhindern, dass es als Düse agiert, während die anderen Löcher aus der Mehrzahl der Löcher unversperrt sind und bei Verwendung als Düse agieren.

12. Eine Spindelanordnung mit aerostatischem Lager, umfassend eine Spindel mit aerostatischem Lager gemäß einem der vorhergehenden Ansprüche sowie ein aktives Steuersystem zum Steuern von zumindest entweder der Versorgung von Gas zu der Gasschicht oder dem Austritt von Gas aus der Gasschicht, um das Druckprofil um das Lager in Verwendung steuerbar zu ändern.

13. Eine Spindelanordnung mit aerostatischem Lager gemäß Anspruch 12, in der das aktive Steuersystem umfasst: mindestens einen Sensor zum Erfassen des Verhaltens der Welle, mindestens ein Ventil zum Steuern von mindestens einem von entweder der Versorgung von Gas zu der Gasschicht oder dem Austritt von Gas von der Gasschicht sowie ein Steuermodul zum Steuern des Betriebs des Ventils als Antwort auf die Ausgabe des Sensors.

14. Ein Verfahren zum Betreiben einer Spindelanordnung mit aerostatischem Lager gemäß Anspruch 12 oder Anspruch 13, das den Schritt aufweist: Verwenden des aktiven Steuersystems, um ein höheres Dämpfungsniveau in dem Lager bereitzustellen, wenn die Welle mit einer Geschwindigkeit innerhalb eines vorbestimmten Bereichs um eine Resonanzfrequenz des Systems dreht, im Vergleich dazu, wenn die Welle mit einer Geschwindigkeit außerhalb des vorbestimmten Bereichs dreht.

15. Ein Verfahren zum Steuern der Bahn einer Welle innerhalb eines Lagers einer Spindel mit aerostatischem Lager, während die Spindel eine Welle umfasst, die innerhalb eines aerostatischen Lagers dreht, und das Lager umfasst mindestens zwei Reihen an ebenen Düsen zum Versorgen mit Gas, um eine Drehgasschicht zwischen der Welle und dem Lager zu erzeugen, wobei das Lager ein Zwillingslager mit einem gemeinsamen Auslass zwischen zwei axial beabstandeten Lagerbereichen ist, während jeder Lagerbereich umfasst: eine entsprechende der mindestens zwei Düsenreihen und das Verfahren umfasst den Schritt: Bewirken eines ungleichmäßigen Druckprofils um das Lager, um einen Dämpfeffekt auf das Kreisen der Welle innerhalb des Lagers zu bewirken.

## Revendications

1. Broches à paliers aérostatiques, comprenant un arbre tournant dans un palier aérostatique, le palier comprenant au moins deux séries de diffuseurs lisses pour alimenter le gaz pour générer une couche gazeuse entre l'arbre et le palier, les diffuseurs étant disposés autour d'une circonférence du palier de manière à provoquer en utilisation un profil de pression inégal autour du palier, le palier étant un palier double avec un échappement commun entre deux portions de palier espacées axialement, chaque portion de palier comprenant une série respective d'au moins des deux séries de diffuseurs.

2. Broche à palier aérostatique selon la revendication 1, dans lequel le profil inégal de pression amène l'arbre à adopter une position désaxée à l'intérieur du palier utilisé.

3. Broche à palier aérostatique selon la revendication 1 ou la revendication 2, dans lequel les diffuseurs de chaque série sont disposés comme un anneau incomplet autour de la surface de palier.

4. Broche à palier aérostatique selon l'une des revendications précédentes dans laquelle les diffuseurs sont distribués de manière inégale autour de la circonférence du palier.

5. Broche à palier aérostatique selon l'une des revendications précédentes dans laquelle les diffuseurs sont disposés autour de la circonférence du palier de sorte qu'il en résulte une zone injectée et une zone non injectée, la zone non injectée occupant une partie de la circonférence qui est plus grande que l'espace circonférentiel moyen entre les diffuseurs adjacents dans la zone injectée.

6. Broche à palier aérostatique selon la revendication 5 dans laquelle les diffuseurs de la zone injectée sont équidistants.

7. Broche à palier aérostatique selon l'une des revendications précédentes dans laquelle les sorties des diffuseurs dans une série sont disposées sur une ligne circonférentielle autour de la surface de palier.

8. Broche à palier aérostatique selon l'une des revendications 1 à 6 dans laquelle les sorties des diffuseurs dans une série sont espacées axialement entre elles.

9. Broche à palier aérostatique selon l'une des revendications précédentes qui comprend au moins un échappement pour le gaz provenant de la couche gazeuse sortant du palier, dans lequel la sortie du gaz de la couche gazeuse est contrôlée pour générer une contre pression afin de fournir un amortissement dans le palier.

10. Broche à palier aérostatique selon la revendication 9, dans laquelle l'échappement comprend un étranglement.

11. Broche à palier aérostatique selon l'une des revendications précédentes dans laquelle le palier comprend une pluralité de trous, chacun capable d'agir en tant que diffuseur s'ils ne sont pas obstrués, dans laquelle au moins un desdits plusieurs trous est obstrué pour éviter de servir de diffuseur tandis que les autres trous parmi la pluralité de trous sont non obstrués et agissent en tant que diffuseur en cours d'utilisation.

12. Dispositif de broche à palier aérostatique comprenant une broche à paliers aérostatique selon l'une des revendications précédentes et un système de commande pour commander au moins une des alimentations du gaz à la couche gazeuse et la sortie du gaz de la couche pour modifier le profil de pression de manière contrôlée autour du palier en cours d'utilisation.

13. Dispositif de broche à palier aérostatique selon la revendication 12, dans laquelle le système actif de commande comprend au moins un capteur pour détecter le comportement de l'arbre, au moins une soupape pour contrôler au moins une des alimentations du gaz dans la couche gazeuse et sa sortie de la couche gazeuse et un module de contrôle pour contrôle le fonctionnement de la soupane en réponse à la sortie du capteur.

14. Procédé de fonctionnement d'un dispositif de broche à palier aérostatique selon la revendication 12 ou la revendication 13, comprenant l'étape d'utilisation du système de commande active pour fournir, quand l'arbre est en rotation à une vitesse comprise dans une plage prédéterminée autour d'une fréquence de résonance du système, un niveau d'amortissement dans le palier plus élevé que le niveau quand l'arbre tourne à une vitesse aérostatique hors de la plage prédéterminée.

15. Procédé de commande de la rotation d'un arbre à l'intérieur d'une broche à palier aérostatiques, la broche comprenant au moins deux séries de diffuseurs lisses pour alimenter le gaz pour générer une couche gazeuse entre l'arbre et le palier, les diffuseurs étant disposés autour d'une circonférence du palier de manière à provoquer en utilisation un profil de pression inégal autour du palier, le palier étant un palier double avec un échappement commun entre deux portions de palier espacées axialement, chaque portion de palier comprenant une série respective d'au moins deux séries de diffuseurs et le procédé comprenant l'étape de générer un profil de pression inégal autour du palier pour provoquer un effet d'amortissement sur la course de rotation de l'arbre à l'intérieur du palier.
